# EUROPÄISCHE PATENTSCHRIFT

(11) **EP 3 112 187 B1**
(45) Veröffentlichungstag und Bekanntmachung des Hinweises auf die Patenterteilung: **11.07.2018**
(21) Anmeldenummer: 16154162.8
(22) Anmeldetag: 04.02.2016
(51) Int. Cl.: B60C 11/03, B60C 11/13

(54) **FAHRZEUGLUFTREIFEN**
PNEUMATIC VEHICLE TIRE
PNEU DE VÉHICULE

(30) Priorität: 23.06.2015 DE 102015211508
(43) Veröffentlichungstag der Anmeldung: 04.01.2017
(73) Patentinhaber: Continental Reifen Deutschland GmbH, 30165 Hannover (DE)
(72) Erfinder: Fischer, Markus, 30823 Garbsen (DE); Tsotras, Achillefs, 28195 Bremen (DE); Behr, Ulrich, 30167 Hannover (DE)
(74) Vertreter: Finger, Karsten

(56) Entgegenhaltungen:
- DE-A1-102009 059 182
- JP-A- S61 200 007
- US-A1- 2010 206 446

## Beschreibung

Die Erfindung betrifft einen Fahrzeugluftreifen in Radialbauart mit einem Laufstreifen mit einem schulterseitigen Laufstreifenbereich, welcher eine schulterseitige Profilblockreihe und eine weitere Profilbockreihe, welche voneinander durch eine erste Umfangsrille getrennt sind, umfasst, wobei die weitere Profilblockreihe laufstreifeninnseitig durch eine weitere Umfangsrille begrenzt ist und aus über den Umfang des Laufstreifens aufeinanderfolgenden Makroblöcken zusammengesetzt ist, wobei jeder Makroblock an seiner Randkante zur weiteren Umfangsrille eine in Umfangsrichtung ermittelte Erstreckungslänge von 80 mm bis 180 mm aufweist und mit einer Anzahl von von der ersten Umfangsrille in den Makroblock hinein verlaufenden, im Makroblock sacknutartig endenden Querrillen versehen ist und zur weiteren Umfangsrille von einer Blockflanke begrenzt ist, welche von der Oberfläche des Makroblockes bis zum Rillengrund reicht.

Aus der US 2010 206 446 A1 ist ein Fahrzeugluftreifen mit einem Laufstreifen bekannt, welcher zwischen schulterseitigen Profilblockreihen weitere Profilblockreihen aufweist. Je zwei in Umfangsrichtung aufeinanderfolgende Profilblöcke der weiteren Profilblockreihen bilden paarweise Doppelblöcke mit einer mittigen Sacknut. Die JP S61 200 007 A offenbart einen Fahrzeugluftreifen mit einem Laufstreifen mit Profilblockreihen, welche voneinander durch Umfangsrillen getrennt sind. Zwischen den Profilblöcken der schulterseitigen Profilblockreihen verlaufen Querrillen, deren Rillenflanken zur radialen Richtung unter sich kontinuierlich ändernden spitzen Winkeln verlaufen.

Es ist üblich, Laufstreifen von Fahrzeugluftreifen hinsichtlich verschiedener Fahreigenschaften zu optimieren, wobei oft Zielkonflikte auftreten, sodass die Verbesserung einer Fahreigenschaft mit der Verschlechterung einer anderen Fahreigenschaft einhergeht. Um sowohl auf trockner als auch auf nasser Fahrbahn gute Fahreigenschaften zu erzielen, ist es bekannt, in Profilblockreihen von Laufstreifen "Makroblöcke" vorzusehen, die eine Umfangserstreckung von bis zu 200 mm aufweisen können und beispielweise mit mehreren parallel zueinander verlaufenden sacknutartig endenden Querrillen versehen sind. Ein Fahrzeugluftreifen der eingangs genannten Art mit derartigen Makroblöcken im schulterseitigen Laufstreifenbereich ist beispielsweise aus der DE 10 2009 059 182 A1 bekannt. Die in Umfangsrichtung aneinander gereihten Makroblöcke sind durch Querrillen voneinander getrennt, wobei die an diese Querrillen angrenzenden Bereiche der Makroblöcke im Vergleich zu ihren mittleren Bereichen eine geringere Quersteifigkeit aufweisen. Um diesem Effekt entgegenzuwirken, sind die laufstreifeninnenseitigen, eine Umfangsrille begrenzenden Blockflanken unmittelbar an die Blockoberfläche anschließend jeweils über die gesamte Umfangserstreckung des Makroblockes mit einer Schrägfläche versehen, die unter einem größeren Winkel zur radialen Richtung geneigt verläuft als der radial innerhalb anschließende Flankenbereich. Die Breite der Schrägflächen verringert sich zwischen den Enden der Makroblöcke, sodass die Schrägflächen zu dem einen Ende der Makroblöcke spitz zusammenlaufen. Die Ausbildung solcher Schrägflächen hat eine ungleichmäßige Verteilung des Gummimaterials über den Reifenumfang zur Folge, die sich nachteilig auf die Hochgeschwindigkeitsfestigkeit des Reifen und das Abrollgeräusch im niederfrequenten Bereich auswirkt.

Der Erfindung liegt daher die Aufgabe zugrunde, Laufstreifen mit Makroblöcken für Fahrzeugluftreifen derart zu gestalten, dass die erwähnten Nachteile nicht mehr auftreten.

Die gestellte Aufgabe wird erfindungsgemäß dadurch gelöst, dass sich die Blockflanke jedes Makroblockes aus drei in radialer Richtung aneinander anschließenden Flankenflächen zusammensetzt, welche sich über die gesamte Umfangserstreckung der Blockflanke erstrecken und jeweils unter einem spitzen Winkel zur radialen Richtung verlaufen, wobei der Winkel der radial inneren Flankenfläche und der Winkel der radial äußeren Flankenfläche ihre Größen über die Umfangserstreckung ihrer Flankenflächen zueinander entgegengesetzt und kontinuierlich ändern und wobei die mittlere Flankenfläche unter einem konstanten Winkel zur radialen Richtung verläuft.

Bei einem erfindungsgemäß ausgeführten Laufstreifen bildet die radial innere Flankenfläche eine "Gegenflankenfläche" zur radial äußeren, sodass die Gummimaterialverteilung jedes Makroblockes im Bereich der Blockflanke im Wesentlichen gleichmäßig ist. Dadurch lassen sich die Hochgeschwindigkeitsfestigkeit des Reifens und das Abrollgeräusch im niederfrequenten Bereich wesentlich verbessern, wobei gute Trocken- und Nässefahreigenschaften erhalten bleiben.

Weitere erfindungsgemäße Maßnahmen tragen dazu bei, bei einer gleichmäßigen Gummimaterialverteilung die Hochgeschwindigkeitsfestigkeit des Reifens weiter zu verbessern und einen gleichmäßigen Abrieb zu gewährleisten. In diesem Zusammenhang ist es von Vorteil, wenn die Winkel der radial inneren und der radial äußeren Flankenflächen an jenen in Umfangsrichtung liegenden Enden der Blockflanke, an welchen sie am größten sind, 30° bis 60°, insbesondere 40° bis 50°, betragen. Besonders vorteilhaft ist es, wenn der Winkel der radial inneren Flankenfläche an jenem in Umfangsrichtung liegenden Ende der Blockflanke, an welchem er am kleinsten ist, 3° bis 25°, vorzugsweise 10° bis 20°, beträgt sowie wenn der Winkel der radial äußeren Flankenfläche an jenem in Umfangsrichtung liegenden Ende der Blockflanke, an welchem er am kleinsten ist, 0° bis 25°, vorzugsweise 10° bis 20°, beträgt.

Insbesondere für die Stabilität der Makroblöcke ist es von Vorteil, wenn der konstante Winkel, unter welchen die mittlere Flankenfläche über ihre Umfangserstreckung zur radialen Richtung verläuft, 3° bis 15°, insbesondere bis zu 10°, beträgt.

Bei einer bevorzugten Ausführungsform der Erfindung schließt die mittlere Flankenfläche in radialer Richtung in einer Tiefe von 50% bis 75%, insbesondere von etwa zwei Drittel, der Tiefe der weiteren Umfangsrille an die radial innere Flankenfläche an. Bei einer weiteren bevorzugten Ausführungsform der Erfindung schließt die radial äußere Flankenfläche in radialer Richtung in einer Tiefe von 25% bis 45%, insbesondere von etwa einem Drittel, der Tiefe der weiteren Umfangsrille an die mittlere Flankenfläche an. Auch diese Massnahmen unterstützen die Hochgeschwindigkeitsfestigkeit des Laufstreifens.

Die vorteilhafte Wirkung der Makroblöcke auf die Fahreigenschaften ist besonders ausgeprägt, wenn die Erstreckungslänge der Makroblöcke in Umfangsrichtung mindestens 110 mm beträgt. In diesem Zusammenhang ist es ferner von Vorteil, wenn der schulterseitige Laufstreifenbereich in axialer Richtung eine Breite von 20% bis 30%, insbesondere von etwa 22,5%, der Breite des Laufstreifens aufweist. Besonders bevorzugter Weise ist der schulterseitige Laufstreifenbereich bei am Fahrzeug montiertem Fahrzeugluftreifen der der Fahrzeugaußenseite zugeordnete Laufstreifenbereich.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf einen Ausschnitt eines Laufstreifens eines Fahrzeugluftreifens mit einer Ausführungsform gemäß der Erfindung und
Fig. 2 bis Fig. 4 Schnittdarstellungen entlang der Linien II-II, III-III und IV-IV der Fig. 1.

Die Erfindung befasst sich mit einer speziellen Gestaltung von Profilblockreihen, welche insbesondere in Laufstreifen für PKW-Reifen, die für einen Einsatz mit hoher Geschwindigkeit geeignet sind, vorgesehen sind.

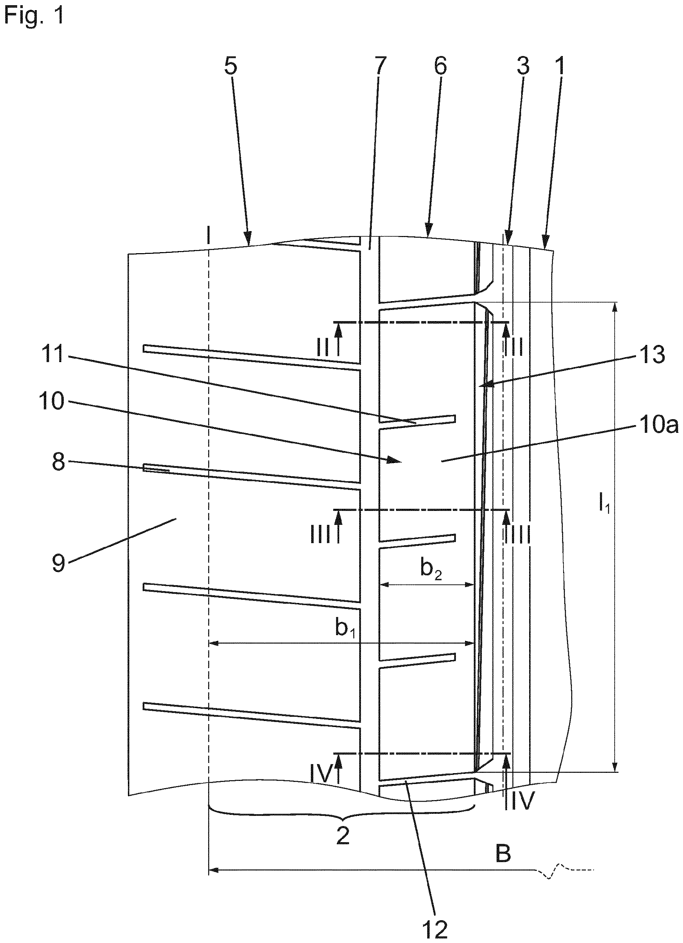

In Fig. 1 sind von einem Ausschnitt eines Laufstreifens ein Teilbereich eines in Umfangsrichtung umlaufenden Profilbandes 1 und ein schulterseitiger Laufstreifenbereich 2, welcher bei am Fahrzeug montiertem Fahrzeugluftreifen vorzugsweise der Fahrzeugaußenseite zugeordnet ist, dargestellt.

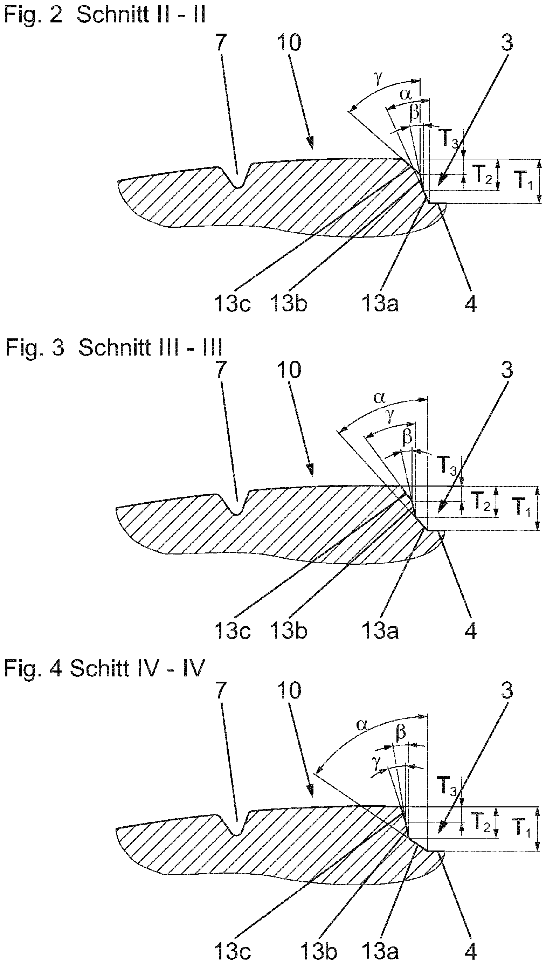

Das Profilband 1 und der schulterseitige Laufstreifenbereich 2 sind voneinander durch eine im Wesentlichen gerade verlaufende Umfangsrille 3 getrennt. Die Umfangsrille 3 weist an ihrem Rillengrund 4 eine Tiefe T₁ (Fig. 2 bis Fig. 4) von 7,0 mm bis 8,5 mm auf, welche der für den betreffenden Fahrzeugluftreifen vorgesehenen maximalen Profiltiefe entspricht.

Der laufstreifenaußenseitige Rand des Laufstreifens bzw. der Bodenaufstandsfläche des Laufstreifens ist in Fig. 1 durch eine in Umfangsrichtung verlaufende Linie 1 gekennzeichnet. Innerhalb der Bodenaufstandsfläche weist der Laufstreifenbereich 2 in axialer Richtung eine Breite b₁ von 20% bis 30%, insbesondere von etwa 22,5%, der Breite B der Bodenaufstandsfläche auf, wobei die Breite B dem statisch ermittelten Footprint gemäß E.T.R.T.O.-Standards (Last bei 70% der Tragfähigkeit bei einem Innendruck von 2,5 bar, Innendruck 85% von 2,5 bar) entspricht.

Der Laufstreifenbereich 2 umfasst eine schulterseitige Profilblockreihe 5 und eine weitere besonders gestaltete Profilblockreihe 6, wobei die Profilblockreihen 5, 6 voneinander durch eine im Vergleich zur Umfangsrille 3 schmäler und seichter ausgeführte Umfangsrille 7 getrennt sind.

In der schulterseitigen Profilblockreihe 5 sind Querrillen 8 ausgebildet, welche über die Bodenaufstandsfläche hinaus, zumindest im Wesentlichen in axialer Richtung sowie parallel zueinander verlaufen, in die Umfangsrille 7 einmünden und die Profilblockreihe 5 in Profilblöcke 9 gliedern.

Die Profilblockreihe 6 setzt sich aus über den Umfang des Laufstreifens aufeinanderfolgenden Makroblöcken 10 zusammen, welche jeweils durch eine zwischen der Umfangsrille 7 und der Umfangsrille 3 zumindest im Wesentlichen in axialer Richtung verlaufende Querrille 12 voneinander getrennt sind. Unter einem "Makroblock" wird im Rahmen dieser Erfindung ein Profilblock verstanden, welcher eine Umfangserstreckung im Ausmaß der durchschnittlichen Umfangserstreckung von insbesondere drei bis fünf Profilblöcken 9 aus der schulterseitigen Profilblockreihe 6 aufweist. Die an der Randkante der Umfangsrille 3 in Umfangsrichtung ermittelte Erstreckungslänge l₁ jedes Makroblockes 10 beträgt 80 mm bis 180 mm, insbesondere mindestens 110 mm. Jeder Makroblock 10 ist ferner mit einer Anzahl, insbesondere zwei bis vier, von der Umfangsrille 7 in den Makroblock 10 hinein verlaufenden, im Makroblock 10 sacknutartig endenden Querrillen 11 versehen.

Bei der gezeigten Ausführungsform sind in jedem Makroblock 10 drei sacknutartig endende Querrillen 11 ausgebildet, welche sich jeweils zumindest über die Hälfte der axialen Breite des Makroblockes 10 erstrecken und den Makroblock 10 in im Wesentlichen übereinstimmend große Blocksegmente 10a gliedern.

Bei der gezeigten Ausführungsvariante sind ferner die Profilblockreihen 5, 6 derart in Umfangsrichtung gegeneinander versetzt, dass die Querrillen 8 aus der Profilblockreihe 5 gegenüber den Querrillen 11, 12 aus der Profilblockreihe 6 in Umfangsrichtung um etwa eine halbe Umfangslänge der Profilblöcke 9 bzw. der Blocksegmente 10a versetzt sind.

Jeder Makroblock 10 ist zur Umfangsrille 3 durch eine Blockflanke 13 begrenzt, welche von der Oberfläche des Makroblockes 10 bis zum Rillengrund 4 reicht und sich, wie in Fig. 2 bis Fig. 4 gezeigt ist, aus drei in radialer Richtung aneinander anschließenden Flankenflächen, einer radial inneren unmittelbar an den Rillengrund 4 der Umfangsrille 3 anschließenden Flankenfläche 13a, einer mittleren Flankenfläche 13b und einer radial äußeren Flankenfläche 13c, zusammensetzt. Sämtliche Flankenflächen 13a, 13b, 13c verlaufen über die gesamte Umfangserstreckung der Blockflanke 13 und damit auch über die gesamte Umfangserstreckung des Makroblockes 10.

Wie Fig. 2 zeigt, schließt die mittlere Flankenfläche 13b an die radial innere Flankenfläche 13a in radialer Richtung in einer Tiefe T₂ an. Die radial äußere Flankenfläche 13c schließt an die mittlere Flankenfläche 13b in radialer Richtung in einer Tiefe T₃ an. Wie Fig. 2 bis Fig. 4 weiter zeigen, sind die Tiefen T₁, T₂, T₃ über die Umfangserstreckung der Blockflanke 13 jeweils konstant. Die Tiefe T₂ beträgt 50% bis 75% der Tiefe T₁ der Umfangsrille 3, die Tiefe T₃ beträgt 25% bis 45% der Tiefe T₁ der Umfangsrille 3.

Die mittlere Flankenfläche 13b verläuft zur radialen Richtung unter einem über ihre Umfangserstreckung zumindest im Wesentlichen konstanten Winkel β von 3° bis 15°, insbesondere von bis zu 10°. Die radial innere Flankenfläche 13a ist zur radialen Richtung unter einem Winkel α geneigt, welcher sich über die Umfangserstreckung der Flankenfläche 13a kontinuierlich ändert. Analoges gilt für die radial äußere Flankenfläche 13c, welche unter einem Winkel γ zur radialen Richtung verläuft.

Der Winkel α und der Winkel γ ändern ihre Größe über die Umfangserstreckung der Flankenflächen 13a, 13c zueinander entgegengesetzt, sodass an dem einen in Umfangsrichtung liegenden Ende der Blockflanke 13 der Winkel α seinen größten Wert und der Winkel γ seinen kleinsten Wert aufweist. Am anderen Ende der Blockflanke 13 weist der Winkel α seinen kleinsten Wert und der Winkel γ seinen größten Wert auf. An jenen Enden der Flankenflächen 13a, 13c, an welchen die Winkel α, γ am größten sind, betragen sie jeweils 30° bis 60°, vorzugsweise 40° bis 50°, vorzugsweise weisen sie übereinstimmende Größen auf. An jenem Ende, an welchem der Winkel α am kleinsten ist beträgt er 3° bis 25°, vorzugsweise 10° bis 20°. Der Winkel γ beträgt an jenem Ende, an welchem er am kleinsten ist, 0° bis 25°, insbesondere 3° bis 25°, vorzugsweise 10° bis 20°. Die kleinsten Werte der Winkel α, γ können ebenfalls übereinstimmen.

### Bezugsziffernliste

- 1: Profilband
- 2: Laufstreifenbereich
- 3: Umfangsrille
- 4: Rillengrund
- 5, 6: Profilblockreihe
- 7: Umfangsrille
- 8: Querrille
- 9: Profilblock
- 10: Makroblock
- 10a: Blocksegment
- 11, 12: Querrille
- 13: Blockflanke
- 13a, 13b, 13c: Flankenfläche
- α, β, γ: Winkel
- b₁, b₂: Breite
- l₁: Länge
- T₁, T₂, T₃: Tiefe

## Patentansprüche

1. Fahrzeugluftreifen in Radialbauart mit einem Laufstreifen mit einem schulterseitigen Laufstreifenbereich (2), welcher eine schulterseitige Profilblockreihe (5) und eine weitere Profilbockreihe (6), welche voneinander durch eine erste Umfangsrille (7), getrennt sind, umfasst, wobei die weitere Profilblockreihe (6) laufstreifeninnseitig durch eine weitere Umfangsrille (3) begrenzt ist und aus über den Umfang des Laufstreifens aufeinanderfolgenden Makroblöcken (10) zusammengesetzt ist, wobei jeder Makroblock (10) an seiner Randkante zur weiteren Umfangsrille (3) eine in Umfangsrichtung ermittelte Erstreckungslänge (l₁) von 80 mm bis 180 mm aufweist und mit einer Anzahl von von der ersten Umfangsrille (7) in den Makroblock (10) hinein verlaufenden, im Makroblock (10) sacknutartig endenden Querrillen (11) versehen ist und zur weiteren Umfangsrille (3) von einer Blockflanke (13) begrenzt ist, welche von der Oberfläche des Makroblockes (10) bis zum Rillengrund (4) reicht, **dadurch gekennzeichnet,**
**dass** sich die Blockflanke (13) jedes Makroblockes (10) aus drei in radialer Richtung aneinander anschließenden Flankenflächen (13a, 13b, 13c) zusammensetzt, welche sich über die gesamte Umfangserstreckung der Blockflanke (13) erstrecken und jeweils unter einem spitzen Winkel (α, β, γ) zur radialen Richtung verlaufen, wobei der Winkel (α) der radial inneren Flankenfläche (13a) und der Winkel (γ) der radial äußeren Flankenfläche (13c) ihre Größen über die Umfangserstreckung ihrer Flankenflächen (13a, 13b) zueinander entgegengesetzt und kontinuierlich ändern und wobei die mittlere Flankenfläche (13b) unter einem konstanten Winkel (β) zur radialen Richtung verläuft.

2. Fahrzeugluftreifen nach Anspruch 1, **dadurch gekennzeichnet, dass** die Winkel (α, γ) der radial inneren und der radial äußeren Flankenflächen (13a, 13c) an jenen in Umfangsrichtung liegenden Enden der Blockflanke (13), an welchen sie am größten sind, 30° bis 60°, insbesondere 40° bis 50°, betragen.

3. Fahrzeugluftreifen nach Anspruch 1 oder 2, **dadurch gekennzeichnet, dass** der Winkel (α) der radial inneren Flankenfläche (13a) an jenem in Umfangsrichtung liegenden Ende der Blockflanke (13), an welchem er am kleinsten ist, 3° bis 25°, vorzugsweise 10° bis 20°, beträgt.

4. Fahrzeugluftreifen nach Anspruch 1 oder 2, **dadurch kennzeichnet, dass** der Winkel (γ) der radial äußeren Flankenfläche (13c) an jenem in Umfangsrichtung liegenden Ende der Blockflanke (13), an welchem er am kleinsten ist, 0° bis 25°, vorzugsweise 10° bis 20°, beträgt.

5. Fahrzeugluftreifen nach einem der Ansprüche 1 bis 4, **dadurch gekennzeichnet, dass** der konstante Winkel (β), unter welchen die mittlere Flankenfläche (13b) über ihre Umfangserstreckung zur radialen Richtung verläuft, 3° bis 15°, insbesondere bis zu 10°, beträgt.

6. Fahrzeugluftreifen nach einem der Ansprüche 1 bis 5, **dadurch gekennzeichnet, dass** die mittlere Flankenfläche (13b) in radialer Richtung in einer Tiefe (T₂) von 50% bis 75%, insbesondere von etwa zwei Drittel, der Tiefe (T₁) der weiteren Umfangsrille (3) an die radial innere Flankenfläche (13a) anschließt.

7. Fahrzeugluftreifen nach einem der Ansprüche 1 bis 6, **dadurch gekennzeichnet, dass** die radial äußere Flankenfläche (13c) in radialer Richtung in einer Tiefe (T₃) von 25% bis 45%, insbesondere von etwa einem Drittel, der Tiefe (T₁) der weiteren Umfangsrille (3) an die mittlere Flankenfläche (13b) anschließt.

8. Fahrzeugluftreifen nach einem der Ansprüche 1 bis 7, **dadurch gekennzeichnet, dass** die Erstreckungslänge (l₁) der Makroblöcke (10) in Umfangsrichtung mindestens 110 mm beträgt.

9. Fahrzeugluftreifen nach einem der Ansprüche 1 bis 8, **dadurch gekennzeichnet, dass** der schulterseitige Laufstreifenbereich (2) in axialer Richtung eine Breite (b₁) von 20% bis 30%, insbesondere in etwa 22,5%, der Breite (B) des Laufstreifens aufweist.

10. Fahrzeugluftreifen nach einem der Ansprüche 1 bis 9, **dadurch gekennzeichnet, dass** der schulterseitige Laufstreifenbereich (2) bei am Fahrzeug montiertem Fahrzeugluftreifen der der Fahrzeugaußenseite zugeordnete Laufstreifenbereich ist.

## Claims

1. Pneumatic vehicle tyre of a radial type of construction with a tread having a shoulder-side tread region (2), which comprises a shoulder-side row of profile blocks (5) and a further row of profile blocks (6), which are separated from each other by a first circumferential groove (7), the further row of profile blocks (6) being delimited on the inner side of the tread by a further circumferential groove (3) and being made up of macro blocks (10) following one another over the circumference of the tread, each macro block (10) having at its marginal edge in relation to the further circumferential groove (3) a length of extent (l₁), determined in the circumferential direction, of 80 mm to 180 mm and being provided with a number of transverse grooves (11), which run from the first circumferential groove (7) into the macro block (10) and end in the macro block (10) in the manner of a dead-end groove, and being delimited with respect to the further circumferential groove (3) by a block flank (13), which reaches from the surface of the macro block (10) to the groove base (4),
**characterized**
**in that** the block flank (13) of each macro block (10) is made up of three flank faces (13a, 13b, 13c) adjoining one another in the radial direction, which extend over the entire circumferential extent of the block flank (13) and respectively run at an acute angle (α, β, γ) in relation to the radial direction, the angle (α) of the radially inner flank face (13a) and the angle (γ) of the radially outer flank face (13c) changing their magnitudes oppositely to one another and continuously over the circumferential extent of their flank faces (13a, 13b), and the middle flank face (13b) running at a constant angle (β) in relation to the radial direction.

2. Pneumatic vehicle tyre according to Claim 1,
**characterized in that** the angles (α, γ) of the radially inner and radially outer flank faces (13a, 13c) at the ends of the block flank (13), lying in the circumferential direction, at which they are the greatest being 30° to 60°, in particular 40° to 50°.

3. Pneumatic vehicle tyre according to Claim 1 or 2,
**characterized in that** the angle (α) of the radially inner flank face (13a) at the end of the block flank (13), lying in the circumferential direction, at which it is the smallest being 3° to 25°, preferably 10° to 20°.

4. Pneumatic vehicle tyre according to Claim 1 or 2,
**characterized in that** the angle (γ) of the radially outer flank face (13c) at the end of the block flank (13), lying in the circumferential direction, at which it is the smallest being 0° to 25°, preferably 10° to 20°.

5. Pneumatic vehicle tyre according to one of Claims 1 to 4, **characterized in that** the constant angle (β) at which the middle flank face (13b) runs over its circumferential extent in relation to the radial direction is 3° to 15°, in particular up to 10°.

6. Pneumatic vehicle tyre according to one of Claims 1 to 5, **characterized in that** the middle flank face (13b) adjoins the radially inner flank face (13a) in the radial direction at a depth (T₂) of 50% to 75%, in particular of approximately two thirds, of the depth (T₁) of the further circumferential groove (3) .

7. Pneumatic vehicle tyre according to one of Claims 1 to 6, **characterized in that** the radially outer flank face (13c) adjoins the middle flank face (13b) in the radial direction at a depth (T₃) of 25% to 45%, in particular of approximately one third, of the depth (T₁) of the further circumferential groove (3).

8. Pneumatic vehicle tyre according to one of Claims 1 to 7, **characterized in that** the length of extent (l₁) of the macro blocks (10) in the circumferential direction is at least 110 mm.

9. Pneumatic vehicle tyre according to one of Claims 1 to 8, **characterized in that** the shoulder-side tread region (2) has in the axial direction a width (b₁) of 20% to 30%, in particular approximately 22.5%, of the width (B) of the tread.

10. Pneumatic vehicle tyre according to one of Claims 1 to 9, **characterized in that**, with the pneumatic vehicle tyre fitted on the vehicle, the shoulder-side tread region (2) is the tread region assigned to the outer side of the vehicle.

## Revendications

1. Pneumatique de véhicule, du type à structure radiale, doté d'une bande de roulement dotée côté épaule d'une zone de bande de roulement (2), celle-ci comprenant une rangée de blocs de profil (5) côté épaule et une rangée supplémentaire de blocs de profil (6), celles-ci étant séparées par une première rainure périphérique (7), dans lequel la rangée supplémentaire de blocs de profil (6) est délimitée du côté intérieur de la bande de roulement par une rainure périphérique supplémentaire (3) et est assemblé à partir de macroblocs (10) consécutifs sur le pourtour de la bande de roulement, dans lequel chaque macrobloc (10) comporte sur son bord marginal bordant la rainure périphérique supplémentaire (3) une longueur d'étendue (l₁) déterminée dans la direction du pourtour comprise entre 80 mm et 180 mm et est prévu avec un nombre de rainures transversales (11) s'étendant de la première rainure périphérique (7) jusque dans le macrobloc (10) et se terminant en gorge borgne dans le macrobloc (10) et est délimité à la rainure périphérique supplémentaire (3) par un flanc de bloc (13), ce dernier s'étendant de la surface externe du macrobloc (10) jusqu'à la base de la rainure (4),
**caractérisé en ce que** le flanc de bloc (13) de chaque macrobloc (10) est constitué de trois surfaces de flanc (13a, 13b, 13c) jointes l'une à l'autre, s'étendant sur toute l'étendue périphérique du flanc de bloc (13) et décrivant chacune un angle aigu (α, β, γ) par rapport à la direction radiale, dans lequel l'angle (α) de la surface de flanc radiale intérieure (13a) et l'angle (γ) de la surface de flanc radiale extérieure (13c) modifient en continu et de façon opposée l'une à l'autre leurs valeurs sur l'étendue périphérique de leurs surfaces de flanc (13a, 13b) et dans lequel la surface de flanc (13b) du milieu décrit un angle constant (β) par rapport à la direction radiale.

2. Pneumatique de véhicule selon la revendication 1,
**caractérisé en ce que** les angles (α, γ) des surfaces de flanc radiale intérieure et radiale extérieure (13a, 13c) à cette extrémité du flanc de bloc (13) située dans la direction du pourtour, où leurs valeurs sont à leur maximum, possèdent une valeur comprise entre 30° et 60°, en particulier entre 40° et 50°.

3. Pneumatique de véhicule selon la revendication 1 ou 2, **caractérisé en ce que** l'angle (α) de la surface de flanc radiale intérieure (13a) à cette extrémité du flanc de bloc (13) située dans la direction du pourtour, où sa valeur est à son minimum, possède une valeur comprise entre 3° et 25°, de préférence entre 10° et 20°.

4. Pneumatique de véhicule selon la revendication 1 ou 2, **caractérisé en ce que** l'angle (γ) des surfaces de flanc radiale extérieure (13c) à cette extrémité du flanc de bloc (13) située dans la direction du pourtour, où sa valeur est à son maximum, possède une valeur comprise entre 0° et 25°, de préférence entre 10° et 20°.

5. Pneumatique de véhicule selon l'une des revendications 1 à 4, **caractérisé en ce que** l'angle constant (β) décrit par la surface de flanc du milieu (13b) sur l'étendue périphérique par rapport à la direction radiale possède une valeur comprise entre 3° et 15°, en particulier entre 3° et 10°.

6. Pneumatique de véhicule selon l'une des revendications 1 à 5, **caractérisé en ce que** la surface de flanc du milieu (13b) est jointe à la surface de flanc radiale intérieure (13a) dans la direction radiale et à une profondeur (T₂) d'une valeur de 50 % à 75 %, en particulier d'environ deux tiers, de la valeur de la profondeur (T₁) de la rainure périphérique supplémentaire (3).

7. Pneumatique de véhicule selon l'une des revendications 1 à 6, **caractérisé en ce que** la surface de flanc radiale extérieure (13c) est jointe à la surface de flanc du milieu (13b) dans la direction radiale et à une profondeur (T₃) d'une valeur de 25 % à 45 %, en particulier d'environ un tiers, de la valeur de la profondeur (T₁) de la rainure périphérique supplémentaire (3).

8. Pneumatique de véhicule selon l'une des revendications 1 à 7, **caractérisé en ce que** la longueur d'étendue (l₁) des macroblocs (10) est d'au moins 110 mm dans la direction du pourtour.

9. Pneumatique de véhicule selon l'une des revendications 1 à 8, **caractérisé en ce que** la zone de bande de roulement côté épaule (2) comporte dans la direction axiale une largeur (b₁) d'une valeur de 20 % à 30 %, en particulier d'environ 22,5 %, de la largeur (B) de la bande de roulement.

10. Pneumatique de véhicule selon l'une des revendications 1 à 9, **caractérisé en ce que** la zone de bande de roulement côté épaule (2) est la zone de bande de roulement ordonnée au côté extérieur du véhicule lorsque le pneumatique de véhicule est monté sur le véhicule.
